# EUROPEAN PATENT APPLICATION

(11) **EP 2 502 505 A1**
(43) Date of publication of application: **26.09.2012**
(21) Application number: 11425072.3
(22) Date of filing: 23.03.2011
(51) Int. Cl.: A23L 1/212, A23L 1/29

(54) **A packaged food product**

(71) Applicant: Industrie Rolli Alimentari S.p.A., 64026 Roseto degli Abruzzi (Teramo) (IT)
(72) Inventor: Rolli, Gian Paolo, 43035 Felino (Parma (IT)
(74) Representative: Monelli, Alberto

(57) **Abstract**

A packaged food product for infants, comprising:
- a container;
- vegetables in pieces, deep-frozen and placed in the container.

The vegetables have a concentration of cadmium which is less than or equal to 0.03mg/kg, a concentration of lead which is less than or equal to 0.04 mg/kg, a concentration of phytopharmaceutical substances of less than 10 parts per billion, a concentration of nitrates of less than or equal to 200 mg/kg, a concentration of nitrites of less than or equal to 3 mg/kg.

## Description

The present invention relates to a food product for infants. A further object of the invention is a preparation method of the food which is a part of said product.

Food products are known which are based on vegetables containing synthetic vitamins and chemical additives. These food products are placed in plastic containers and require sterilisation for conservation thereof. A drawback of these products is connected to the fact that they are subjected to a strong sterilisation treatment which causes a deterioration in the organoleptic and nutritional characteristics thereof.

A mother might alternatively buy vegetables from a greengrocer and cook and prepare them as preferred. This solutions is also not without drawbacks. For example, the vegetables bought from the greengrocer are usually uncertified for the whole period going from production up to being put up for sale (for example in retail sales points they might be improperly conserved in places where the vegetables might be exposed to smog). Further, a considerable time is required for manual preparation of a meal based on vegetables (time linked for example to the need to wash, cut and cook the vegetables, etc.). In this context, the technical task underpinning the present invention is to provide a food product for infants which enables rapid and easy conservation and preparation, while at the same time enables provision of products that are scrupulously selected and controlled, the latter being a fundamental aspect for feeding an infant.

The specified technical task and the set aims are substantially attained by a food product comprising the technical characteristics set out in one or more of the appended claims.

Further characteristics and advantages of the present invention will more clearly emerge from the detailed description, given by way of non-limiting example, of a preferred but not exclusive embodiment of a food product.

The object of the invention is a packaged food product for infants. The food product comprises a container. In the preferred solution the container is a sachet. Typically the container is made of polyethylene. Each container is single-portion (typically each container comprises 150 grams of vegetables; the quantity takes account of the fact that the product is destined for infants).

The food product further comprises deep-frozen vegetables in pieces and placed in the container. The pieces are substantially regularly dimensioned. The pieces are preferably in cubes. The vegetables are deep-frozen using I.Q.F. technology (individual quick freezing). The vegetables are therefore deep-frozen individually.

The vegetables have a small concentration of heavy metals (in particular they exhibit a quantity of cadmium that is less than or equal to 0.03 mg (milligrams) for each kilogram of vegetables present and/or a quantity of lead which is less than or equal to 0.04 mg (milligrams) for each kilogram of vegetables present).

The vegetables are organic (this means that: any pesticides contained are only of a natural type, for example copper, and in any case are in quantities of less than 10 parts per billion); only natural fertilisers are used, such as for example manure; terrains are used for the cultivation which in the three preceding years have not been treated with synthetic pesticides).

In a further solution the vegetables might be certificated as treated with certified integrated control with residues of pesticides that are not experimentally detectable. The vegetables are further certified (i.e. cultivated in companies that are certified for Organic Cultivation and/or Integrated Control). They are cultivated in Italy. In particular they exhibit a quantity of phytopharmaceutical substances that is lower than 10 parts per billion (in particular they are present in a quantity that is not experimentally detectable). They further exhibit a concentration of nitrates which is lower than 200 mg per each kilogram of vegetables and/or a quantity of nitrites which is less than or equal to 3 mg for each kilogram of vegetables present.

These results are obtained by selecting vegetables which originate from strictly-selected places of cultivation which apply strict protocols, said protocol being known in the sector as "Disciplinare di Coltivazione" ("Cultivation Rulebook") (organic cultivations distant from motorways and zones at high risk of environmental pollution). For this purpose there is a complete control of the supply chain from seeding to packaging.

The vegetables do not contain ingredients, additives, flavourings, technological processing aids, supports for additives and flavourings constituted or deriving from genetically-modified products. The vegetables do not contain allergens in conformity with Directives 2000/13/CE, 2003/89/CE, 2006/142/CE.

The product is not irradiated with ionisers in conformity with Directives 1999/2/CE and 1993/3/CE. Production is carried out in an authorised plant for production of food for children.

The packaged food product for infants further comprises a pack. The pack contains two of said containers. In the preferred embodiment each of said containers is shaped as a sachet containing said vegetables. The pack is made of a paper material. Typically the pack is made of polyethylene-coated cardboard. The pack typically has dimensions of 182x107x43 millimetres.

In the preferred embodiments said vegetables comprise:
- potatoes (preferably 50% in weight) and courgettes (preferably 50% in weight) or
- green beans (preferably 35% in weight) and broccoli (preferably 45% in weight) and potatoes (preferably 20% in weight) or
- green beans (preferably 50% in weight) and carrots (preferably 35% in weight) and potatoes (preferably 15% in weight) or
- carrots (preferably 40% in weight) and pumpkin (preferably 50% in weight) and potatoes (preferably 10% in weight).

The above recipes have been developed taking into account the nutritional needs of infants.

Each of said pieces of vegetable is advantageously singly containable within an imaginary parallelepiped having dimensions of 27x15x15 millimetres. Each of said pieces of vegetable is preferably singly containable in an imaginary cube having sides of 15 millimetres (especially in the absence of broccoli or green beans). The vegetables are advantageously placeable into a multifunctional kitchen apparatus comprising:
- a cooking compartment;
- a boiler for steam-cooking in fluid communication with said compartment.

In a non-preferred alternative embodiment the food could also be cooked in water, using the cooking broth, or placed in a container such as to be reconstituted in a microwave oven.

The object of the present invention is also a preparation method of food present in a food product for infants exhibiting one of more of the characteristics indicated herein above. The method advantageously comprises the following steps:
- defreezing the vegetables;
- cooking the vegetables;
- blending the vegetables

The step of cooking the vegetables advantageously comprises performing a steam cooking.

The step of cooking the vegetables (in particular performing a steam-cooking) determines the formation of a broth; said method comprises the step of mixing the vegetables with said broth. The step of mixing the vegetables with said both is advantageously performed before blending the vegetables themselves.

The step of steam-cooking the vegetables is done in a perforated basket placed in a beaker of a multifunctional apparatus provided with a boiler for steam-cooking (an example of the multifunctional apparatus is also known by the trade name of Babycook); a blade is located on the bottom of the beaker, which blade enables the following blending step, said broth, during the cooking step, accumulating on the bottom of the beaker. The broth advantageously accumulates on the bottom of said beaker by falling by force of gravity from the basket during the cooking of the vegetables. Thus the invention as conceived enables multiple advantages to be attained.

In particular the invention provides a genuine product (baby-food) destined for infants (typically from 6 months old upwards) while at the same time it is extremely practical and rapid. The guarantee of product traceability and the fact that the products used are specifically for infants are extremely interesting aspects. Further, the present invention provides a packaged product, but similar to a meal that any mother would prepare for her child when separately buying the various vegetables, then to cook them together (said packaged product additionally offers the advantages connected to the genuineness of the products and the control of the supply chain from cultivation to packaging).

The invention as it is conceived is susceptible to numerous modifications and variants, all falling within the scope of the inventive concept characterising it. Further, all the details can be substituted by other technically-equivalent elements. In practice, all the materials used, as well as the dimensions thereof, might be of any type, according to needs.

## Claims

1. A packaged food product for infants, **characterised in that** it comprises:
- a container;
- vegetables in pieces, deep-frozen and placed in the container;
said vegetables having a concentration of cadmium which is less than or equal to 0.03mg/kg, a concentration of lead which is less than or equal to 0.04 mg/kg, a concentration of phytopharmaceutical substances of less than 10 parts per billion, a concentration of nitrates of less than or equal to 200 mg/kg, a concentration of nitrites of less than or equal to 3 mg/kg.

2. The product according to claim 1, **characterised in that** the vegetables are organic.

3. The product according to claim 1 or 2, **characterised in that** it comprises a package, said package containing two of said containers, each of said containers being shaped as a sachet containing said vegetables.

4. The product according to any one of the preceding claims, **characterised in that** said vegetables comprise:
- potatoes and courgettes or
- green beans and broccoli and potatoes or
- green beans and carrots and potatoes or
- carrots and pumpkin and potatoes.

5. The product according to any one of the preceding claims, **characterised in that** each sachet is a single-portion serving.

6. The product according to any one of the preceding claims, **characterised in that** each of said pieces of vegetables is singly containable in an imaginary parallelepiped having dimensions of 27x15x15 millimetres.

7. A preparation method of a food product for infants, according to one or more of claims from 1 to 6, **characterised in that** it comprises following steps:
- defreezing the vegetables;
- cooking the vegetables;
- blending the vegetables.

8. The method of claim 7, **characterised in that** the step of cooking the vegetables comprises steam cooking.

9. The method of claim 8, **characterised in that** the step of steam-cooking determines a formation of a broth; said method comprising a step of blending the vegetables with the broth.

10. The method of claim 9, **characterised in that** the step of steam-cooking the vegetables is performed in a perforated basket placed in a beaker of a multifunctional apparatus provided with a boiler for steam-cooking, on a bottom of which beaker a blade is present, which blade enables the following blending step to be performed, said broth accumulating on the bottom of said beaker during the cooking step.
